# FASCICULE DE BREVET EUROPEEN

(11) **EP 2 633 753 B1**
(45) Date de publication et mention de la délivrance du brevet: **29.04.2015**
(21) Numéro de dépôt: 13290039.0
(22) Date de dépôt: 26.02.2013
(51) Int. Cl.: A01G 13/10, A01G 9/10

(54) **Emballage fait dans un matériau biodégradable pour transporter, protéger et planter des plantes**
Verpackung aus einem biologisch abbaubarem Material für den Transport, Schutz und Pflanzvorgang von Pflanzen
Packaging made of a biodegradable material for transporting, protecting and planting plants

(30) Priorité: 28.02.2012 FR 1200567
(43) Date de publication de la demande: 04.09.2013
(73) Titulaire: Sodisac, 41100 Thor La Rochette (FR)
(72) Inventeur: Samoggia, Hervé, 37380 Monnaie (FR)
(74) Mandataire: Hammond, William

(56) Documents cités:
- EP-A1- 0 664 078
- EP-A1- 1 216 611
- DE-A1- 4 009 463
- FR-A1- 2 715 919
- US-A1- 2010 115 835

## Description

La présente invention est relative à un emballage en un matériau biodégradable pour transporter, protéger et planter des plantes.

Dans le domaine de la production végétale, on utilise déjà des matériaux biodégradables pour protéger les jeunes plantes contre l'attaque d'animaux. Ainsi dans le document FR-2 850 242-A est décrit un dispositif de protection de jeunes plants réalisé en un papier biodégradable pouvant également résister à l'action de nuisibles.

Généralement, les dispositifs connus sont de forme creuse à section circulaire comme celui selon le document ci-dessus, ou de forme polygonale comme ceux décrits dans les documents GB-2 104 366-A, EP-1 292 181-A, GB-2 258 797-A. Ces dispositifs sont en un matériau biodégradable ou réalisés avec un fil en matière plastique.

Mais ces produits de l'art antérieur reposent tous sur le sol ou sont très faiblement enterrés et ce dans le seul but d'augmenter leur stabilité. De plus ils ne protègent que les parties aériennes de la plante.

En outre, lorsque ces dispositifs sont en une matière plastique ou en tout autre matériau non-biodégradable, se pose le problème de leur traitement lorsqu'ils sont dégradés.

Enfin, aucun de ces dispositifs antérieurs ne permet de transporter le jeune plant puisque celui-ci reste planté dans un pot qui peut éventuellement être biodégradable.

Aussi un des buts de la présente invention est-il de fournir un emballage en un matériau biodégradable pour transporter protéger et planter des végétaux.

Un autre but de l'invention est de diminuer le nombre de manipulations souvent préjudiciable à l'intégrité de la plante.

Ces buts, ainsi que d'autres qui apparaîtront par la suite, sont atteints par un emballage en un matériau biodégradable pour transporter, protéger et planter des plantes qui est caractérisé, selon la présente invention, par le fait qu'il a la forme d'un sac constitué d'une paroi fermée sur elle-même et comportant à une extrémité un fond, cette paroi étant munie d'ouvertures dans ses parties haute et basse.

Selon l'invention, le matériau biodégradable se dégrade plus vite dans le sol que dans sa partie au-dessus du sol.

De préférence, cet emballage comporte une bande de renforcement délimitant la partie basse de l'emballage à enterrer de sa partie haute entourant la partie aérienne du végétal.

Avantageusement, la bande de renforcement comporte elle aussi des ouvertures.

De préférence, le bord libre de cet emballage peut comporter une bande de renfort afin d'éviter notamment un déchirement de ce bord, par exemple du fait du frottement des parties aériennes de la plante.

Avantageusement, le diamètre des ouvertures sont fonction de l'état de maturité du végétal contenu dans un tel emballage.

Selon un mode de réalisation préféré, la paroi comporte, dans sa partie haute, au moins un passage pour un élément de fixation dans le sol.

Avantageusement, ce passage est constitué par une bandelette découpée dans la paroi dont elle reste solidaire.

De préférence, le matériau biodégradable peut être constitué de couches superposées d'un même produit biodégradable avec ajout d'un liant biodégradable et/ou d'une grille biodégradable afin de tenir compte de la durée de passage de l'état jeune à l'état adulte selon les végétaux contenus dans les emballages selon la présente invention.

La description qui va suivre et qui ne comporte aucun caractère limitatif, doit être lue en regard des figures annexées, parmi lesquelles :

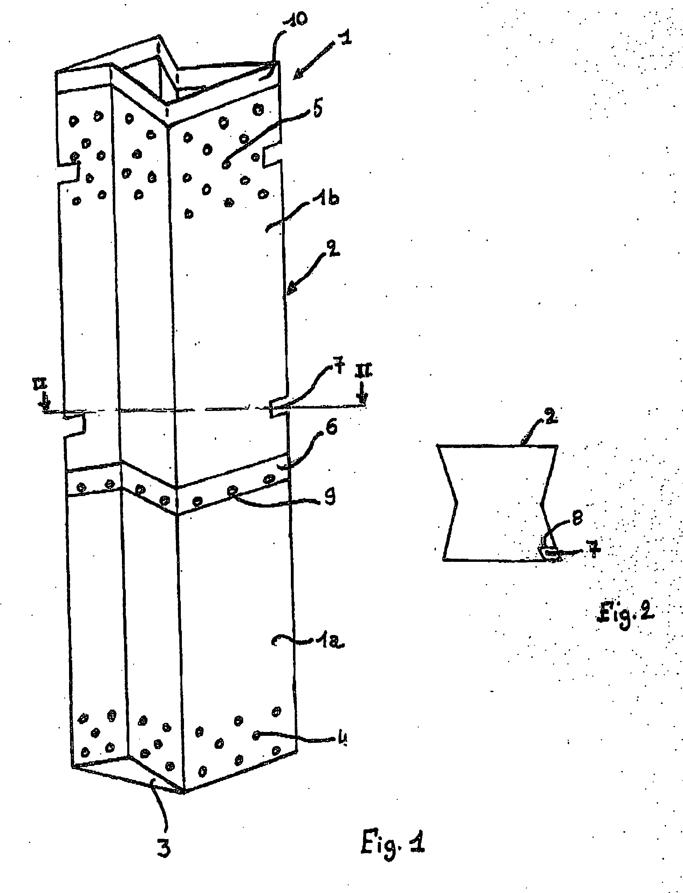

- La figure 1 représente une vue en perspective d'un emballage selon la présente invention prêt à l'emploi ; et,
- La figure 2 est une vue en coupe de l'emballage selon le plan II-II de la figure 1.

Ainsi qu'on peut le voir sur ces figures, un emballage, désigné dans son ensemble par la référence 1, comporte, selon la présente invention, une paroi de section rectangulaire, fermée sur elle-même, selon le présent exemple de réalisation, dont une extrémité est fermée par un fond 3. Cette section peut tout aussi bien être carrée ou ronde.

Cet emballage 1 est réalisé en un matériau biodégradable tel qu'un papier présentant une certaine résistance notamment aux intempéries et dont les éventuels résidus sont recyclables.

Selon un mode de réalisation de l'invention, ce matériau biodégradable peut être constitué de couches superposées d'un même produit biodégradable avec ajout d'un liant biodégradable et/ou d'une grille biodégradable, afin de tenir compte de la durée de passage de l'état jeune à l'état adulte selon les végétaux contenus dans les emballages selon la présente invention.

La paroi 2 de cet emballage 1 comporte dans sa partie inférieure 1a, en l'occurrence celle proche du fond 3, de premières ouvertures 4 et dans sa partie haute 1b de secondes ouvertures 5. Le diamètre de ces ouvertures est fonction, non seulement, des parties de la plante (racines pour les premières ouvertures 4, partie aérienne pour les secondes ouvertures 5), mais de l'état de maturité de la plante contenue.

En général, les premières ouvertures 4 sont situées dans le premier tiers de la paroi 2 à partir du fond 3, et les secondes ouvertures 5 dans le tiers supérieur de cette même paroi 2.

De plus, selon la présente invention, la partie inférieure de cet emballage 1 qui est destinée à être enterrée, aura une biodégradabilité plus élevée que la partie haute restant à l'air libre : par exemple, la partie basse située dans le sol se dégraderait en deux mois, et la partie haute en deux ans. Ainsi, cet emballage protège les racines de la plante, pendant la durée de l'installation de leur résistance aux nuisibles souterrains et les parties aériennes pendant la durée de l'installation de leur résistance aux actions nuisibles de surface tels que par exemple animaux, intempéries, traitements phytosanitaires.

Selon un mode de réalisation préféré de l'invention, la paroi 2 de l'emballage 1 comporte, entre sa partie basse 1a et sa partie haute 1b, une bande 6 de renforcement : celle-ci a, non seulement, pour fonction d'indiquer la hauteur à laquelle l'emballage 1 doit être enterré, mais aussi de constituer une sécurité pour assurer que la dégradation de la partie basse ne se propage pas à la partie supérieure. Dans certains cas, il peut être avantageux que cette bande de renforcement comporte des ouvertures complémentaires 9.

De même, le bord libre 2a de la partie haute 1b de la paroi 2 peut comporter une bande de renfort 10 afin d'augmenter la résistance au déchirement de ce bord notamment du fait des parties aériennes de la plante emballée.

De plus, le long de la paroi 2 d'un emballage 1 selon la présente invention peut comporter au moins un passage 7 pour permettre de disposer verticalement un élément de maintien (non représenté) dans le sol. Ce passage 7 est en fait constitué par une bandelette 8 découpée dans la paroi 2 dont elle reste solidaire.

Un tel emballage 1 peut être livré et stocké à plat de façon connue. Ce n'est que lors de l'insertion de la plante que l'emballage 1 est ouvert de telle sorte qu'il constitue un sac, dans lequel est introduite la plante avec sa motte vers le fond 3. Du fait des qualités du matériau constituant l'emballage 1, celui-ci garde suffisamment d'humidité pour maintenir la plante en bon état pendant son trajet entre le lieu d'expédition et celui où elle sera mise en terre dans son emballage.

L'utilisateur, à la réception des plantes ainsi emballées, ne doit plus que creuser un trou et y placer la plante dans son emballage. On peut indiquer sur l'emballage 1 le niveau souhaité si cet emballage ne comporte pas de bande de renforcement 6.

Ainsi qu'aura pu le comprendre l'homme du métier, un emballage selon la présente invention permet de satisfaire, en un seul produit biodégradable, la totalité des composants d'une plantation à savoir le transport, le pot, le végétal, le terreau, le tuteur, la protection des racines et la protection des parties aériennes pendant la durée du passage de la plante de l'état jeune à l'état adulte.

## Revendications

1. Emballage (1) en un matériau biodégradable pour transporter et planter des plantes, ayant la forme d'un sac constitué d'une paroi (2) fermée sur elle-même et comportant un fond (3) à une extrémité, **caractérisé par le fait que** le matériau biodégradable se dégrade plus vite dans sa partie inférieure (1a) dans le sol que dans sa partie haute (1b) au-dessus du sol.

2. Emballage selon la revendication 1, **caractérisé par le fait qu'**il comporte une bande de renforcement délimitant sa partie basse à enterrer de sa partie entourant la partie aérienne du végétal.

3. Emballage selon la revendication 2, **caractérisé par le fait qu'**au moins la partie inférieure (1a), la bande de renforcement (6) ou la partie haute (1b) de la paroi (2) comporte des ouvertures (4, 5, 9).

4. Emballage selon la revendication 3, **caractérisé par le fait que** le diamètre des ouvertures (4, 5, 9) est fonction de l'état de maturité du végétal contenu dans un tel emballage.

5. Emballage la revendication 1, **caractérisé par le fait que** la paroi comporte, dans sa partie haute, au moins un passage pour un élément de fixation dans le sol.

6. Emballage selon la revendication 5, **caractérisé par le fait que** le passage est constitué par une bandelette découpée dans la paroi dont elle reste solidaire.

7. Emballage selon l'une quelconque des revendications 1 à 6, **caractérisé par le fait que** le matériau biodégradable est constitué de couches superposées d'un même produit biodégradable avec ajout d'un liant biodégradable et d'une grille biodégradable afin de tenir compte de la durée de passage de l'état jeune à l'état adulte selon la plante contenu dans ledit emballage.

## Patentansprüche

1. Verpackung (1) aus einem biologisch abbaubaren Material zum Transportieren und Setzen von Pflanzen, wobei die Verpackung die Form einer Tüte (2) hat, die aus einer in sich geschlossenen Wand (2) gebildet ist und an einem Ende einen Boden (3) aufweist, **dadurch gekennzeichnet, dass** das biologisch abbaubare Material in dem unteren Bereich (1a) in der Erde schneller abgebaut wird als in seinem oberen Bereich (1 b) über der Erde.

2. Verpackung nach Anspruch 1, **dadurch gekennzeichnet, dass** diese einen Verstärkungsstreifen aufweist, der ihren in die Erde einzugrabenden unteren Bereich von ihrem Bereich trennt, der den oberirdischen Teil der Pflanze umschließt.

3. Verpackung nach Anspruch 2, **dadurch gekennzeichnet, dass** zumindest der untere Bereich (1 a), der Verstärkungsstreifen (6) oder der obere Bereich (1 b) der Umwandung (2) Öffnungen (4, 5, 9) aufweisen.

4. Verpackung nach Anspruch 3, **dadurch gekennzeichnet, dass** der Durchmesser der Öffnungen (4, 5, 9) von dem Grad der Reife der in einer solchen Verpackung enthaltenen Pflanze abhängig ist.

5. Verpackung nach Anspruch 1, **dadurch gekennzeichnet, dass** die Wand in ihrem oberen Bereich zumindest einen Durchlass für ein Element zum Befestigen in der Erde aufweist.

6. Verpackung nach Anspruch 5, **dadurch gekennzeichnet, dass** der Durchlass durch einen Streifen gebildet ist, der in die Wand geschnitten ist, mit der er fest verbunden bleibt.

7. Verpackung nach einem der Ansprüche 1 bis 6, **dadurch gekennzeichnet, dass** das biologisch abbaubare Material gebildet ist aus übereinanderliegenden Schichten eines gleichen biologisch abbaubaren Produkts, mit einem hinzugefügten biologisch abbaubaren Bindemittel und einem biologisch abbaubaren Gitter, um je nach Pflanze, die in der Verpackung enthalten ist, dem Übergang von dem jungen Zustand in den ausgewachsenen Zustand Rechnung zu tragen.

## Claims

1. A packaging (1) made of a biodegradable material for transporting and planting plants, having the shape of a bag constituted by a wall (2) closed on itself and comprising a bottom (3) at one end, **characterised in that** the biodegradable material degrades more quickly in its lower part (1a) in the ground than in its upper part (1b) above the ground.

2. A packaging according to Claim 1, **characterised in that** it comprises a reinforcement strip delimiting its lower part, which is to be buried, from its part surrounding the aerial part of the plant.

3. A packaging according to Claim 2, **characterised in that** at least the lower part (1a), the reinforcement strip (6) or the upper part (1b) of the wall (2) comprises openings (4, 5, 9).

4. A packaging according to Claim 3, **characterised in that** the diameter of the openings (4, 5, 9) is a function of the state of maturity of the plant contained in such a packaging.

5. A packaging according to Claim 1, **characterised in that** the wall comprises, in its upper part, at least one passage for an element for fixing in the ground.

6. A packaging according to Claim 5, **characterised in that** the passage is constituted by a band cut in the wall, with which it remains integral.

7. A packaging according to any one of Claims 1 to 6, **characterised in that** the biodegradable material is constituted by superimposed layers of the same biodegradable product with the addition of a biodegradable binder and of a biodegradable grid so as to take into account the duration of passing from the young state to the adult state according to the plant contained in said packaging.
